# FASCICULE DE BREVET EUROPEEN

(11) **EP 0 768 206 B1**
(45) Date de publication et mention de la délivrance du brevet: **21.06.2000**
(21) Numéro de dépôt: 96402140.6
(22) Date de dépôt: 09.10.1996
(51) Int. Cl.: B60Q 1/068

(54) **Agencement d'un bloc optique sur un bloc avant de véhicule automobile**
Einbau einer optischen Einheit in Frontfahrzeugteil
Mounting of an optical block in a front part of vehicle body panel

(30) Priorité: 09.10.1995 FR 9511873
(43) Date de publication de la demande: 16.04.1997
(73) Titulaire: ECIA - EQUIPEMENTS ET COMPOSANTS POUR L'INDUSTRIE AUTOMOBILE, F-25400 Audincourt (FR)
(72) Inventeur: Laurent, Claude, 25420 Voujeaucourt (FR); Trassaert, Patrick, 25400 Audincourt (FR); Galmiche, Etienne, 90400 Vezelois (FR)
(74) Mandataire: Moncheny, Michel

(56) Documents cités:
- BE-A- 543 848
- DE-A- 2 732 895
- FR-A- 2 657 148
- GB-A- 2 029 954
- US-A- 2 225 980
- US-A- 2 281 643

## Description

La présente invention concerne un agencement d'un bloc optique sur un bloc avant de véhicule automobile.

On connaît déjà dans l'état de la technique un bloc optique comprenant un cuvelage dans lequel sont logés un réflecteur et au moins une lampe. Une glace ferme une ouverture avant du cuvelage de manière à séparer le réflecteur de l'extérieur du véhicule.

Afin de simplifier ce type de bloc optique et d'en réduire le coût, on a proposé un bloc optique dépourvu de cuvelage, le réflecteur formant à lui seul une enceinte fermée par la glace.

Ainsi, on a décrit dans FR-A-2.684.936 un agencement d'un bloc optique sur un bloc avant de véhicule automobile, le bloc optique comprenant un réflecteur et une glace séparant ce réflecteur de l'extérieur du véhicule, le bloc avant étant délimité par un élément de carrosserie, la glace étant agencée dans une ouverture de l'élément de carrosserie en étant fixée à cet élément de carrosserie par des premiers moyens de fixation.

Dans ce document, il est proposé de fixer le réflecteur sur la glace par des moyens de fixation formant des moyens de réglage de la position du réflecteur.

Toutefois, on souhaite obtenir actuellement un affleurement aussi parfait que possible de la face externe de la glace avec l'élément de carrosserie.

Pour atteindre cet objectif, il convient, d'une part de réduire le nombre d'éléments constituant un bloc optique, et d'autre part d'imposer des tolérances sévères de fabrication des différents éléments entrant en jeu.

Or, dans le cas d'un réflecteur directement relié à la glace, la qualité d'affleurement de cette glace à la surface externe de l'élément de carrosserie est compromise par le poids du réflecteur et les différentes manipulations d'entretien du bloc optique, notamment le changement de lampe portée par le réflecteur et les réglages multiples de la position de ce réflecteur.

GB-A-2.029.954 décrit un agencement d'un bloc optique sur un bloc avant de véhicule automobile du type précité, dans lequel l'élément de carrosserie participe à l'esthétique extérieure du véhicule, et dans lequel le réflecteur est relié à un élément caché du véhicule, distinct du précédent élément de carrosserie, par des seconds moyens de fixation formant des moyens de réglage de la position du réflecteur.

L'invention a notamment pour but de remédier à l'inconvénient exposé ci-dessus de façon à améliorer la qualité d'affleurement de la glace à la surface externe de l'élément de carrosserie.

A cet effet, l'invention a pour objet un agencement d'un bloc optique sur un bloc avant de véhicule automobile, du type décrit dans GB-A-2.029.954, caractérisé en ce que le réflecteur est relié directement à l'élément de carrosserie par des seconds moyens de fixation distincts des premiers moyens de fixation et formant des moyens de réglage de la position de ce réflecteur.

Suivant d'autres caractéristiques de l'invention :
- les premiers moyens de fixation comprennent des moyens d'encliquetage,
- un joint d'étanchéité est interposé entre des contours complémentaires de l'ouverture de l'élément de carrosserie et de la glace,
- un joint d'étanchéité est interposé entre des contours complémentaires d'un rebord interne de l'élément de carrosserie et du réflecteur,
- les seconds moyens de fixation comprennent trois tiges de positionnement du réflecteur sensiblement parallèles à un axe optique du bloc optique, assujetties au réflecteur, les axes de ces tiges passant par les sommets d'un triangle approximativement rectangle, la tige passant par le sommet d'angle droit étant fixe et les deux autres tiges étant déplaçables sensiblement parallèlement à l'axe optique par rotation autour de leur axe, chaque tige comportant une extrémité rotulante de liaison avec l'élément de carrosserie,
- au moins une des tiges de positionnement est déplaçable à l'aide de moyens motorisés,
- le réflecteur est muni d'une portion de liaison avec les tiges dans laquelle sont ménagés des orifices de passage de ces tiges, ces tiges étant notamment assujetties aux contours des orifices par des filetages complémentaires,
- la portion de liaison est délimitée par une collerette plane périphérique du réflecteur, sensiblement parallèle à un plan perpendiculaire à l'axe optique du bloc optique,
- le réflecteur est destiné à être équipé notamment de feux de route et de croisement, et le bloc optique comporte de plus un réflecteur auxiliaire destiné à être équipé d'un clignotant, rapporté, notamment par encliquetage, sur une extrémité latérale du réflecteur, la glace étant commune aux deux réflecteurs,
- l'élément de carrosserie comprend un pare-chocs, l'ouverture d'agencement de la glace étant ménagée dans une peau en matière plastique délimitant le pare-chocs.

L'invention sera mieux comprise à la lecture de la description qui va suivre donnée uniquement à titre d'exemple et faite en se référant aux dessins annexés dans lesquels :
- la figure 1 est une vue en coupe longitudinale d'un bloc avant de véhicule automobile dans lequel est agencé un bloc optique selon l'invention ;
- la figure 2 est une vue en perspective éclatée du bloc optique et du pare-chocs représentés à la figure 1.

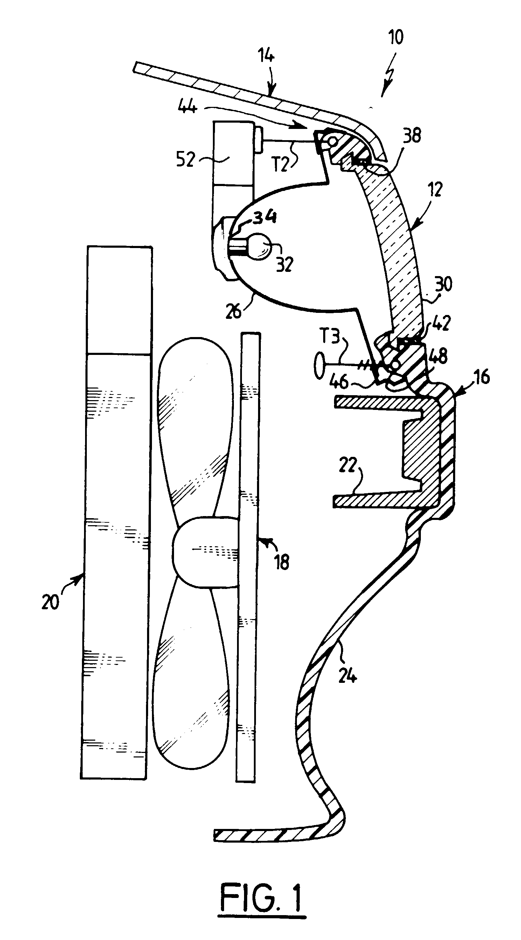

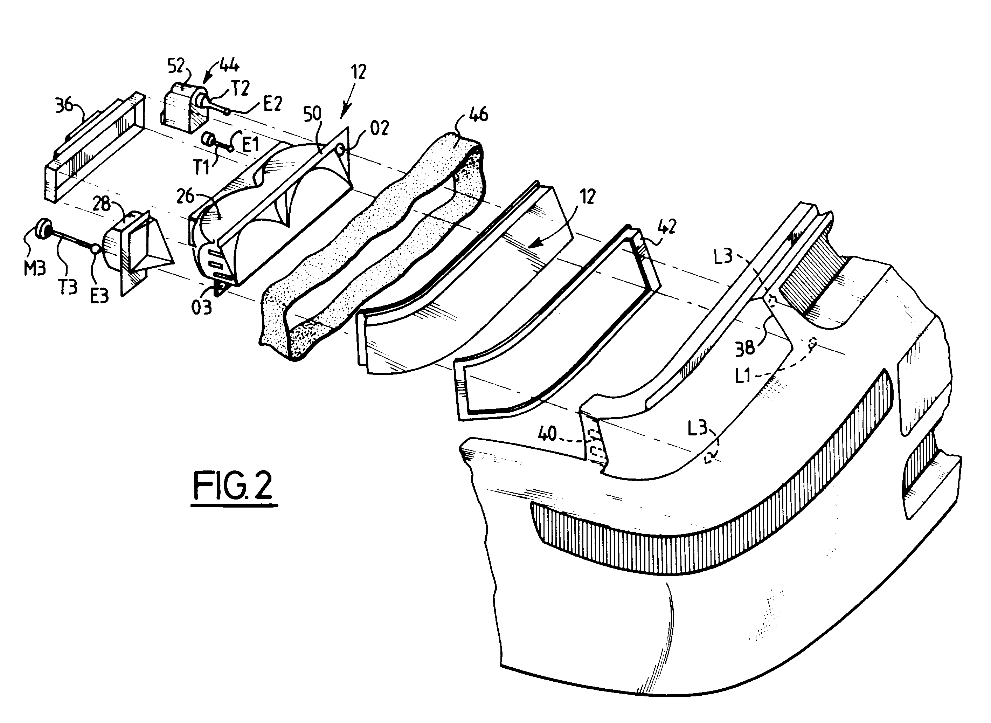

On a représenté sur les figures 1 et 2 un bloc avant 10 de véhicule automobile dans lequel est agencé un bloc optique 12 selon l'invention.

On reconnaît sur la figure 1 une extrémité avant de capot 14 et un pare-chocs avant 16 séparant, de l'extérieur du véhicule, un groupe motoventilateur 18 et un échangeur de chaleur 20.

Le pare-chocs 16 comporte de façon classique une poutre transversale 22, solidaire du corps du véhicule, portant une peau 24 en matière plastique délimitant notamment la partie du pare-chocs qui est visible depuis l'extérieur du véhicule et participe à l'esthétique extérieure du véhicule.

La peau 24 forme un élément de carrosserie dans lequel est agencé le bloc optique 12 comme on le décrira ci-dessous.

Le bloc optique 12 comporte essentiellement un réflecteur 26, un réflecteur auxiliaire 28, et une glace 30, commune aux deux réflecteurs 26, 28, séparant ces derniers de l'extérieur du véhicule.

Le réflecteur 26 est équipé notamment de feux de route et de croisement dont on a représenté une lampe 32.

Le réflecteur auxiliaire 28 est équipé d'un clignotant. Ce réflecteur 28 est rapporté, notamment par encliquetage, sur une extrémité latérale du réflecteur 26.

Une douille de feu de position (non représentée) est éventuellement encliquetée dans le réflecteur 26.

L'extrémité du réflecteur 26, opposée à la glace 30, comporte une ouverture 34 d'accès aux lampes équipant ce réflecteur, obturable par un couvercle 36.

Le couvercle 36 comporte par exemple des moyens de connexion électrique des feux équipant le réflecteur 26.

La glace 30 est agencée dans une ouverture 38 de forme complémentaire ménagée dans la peau 24 du pare-chocs.

La glace 30 est fixée sur le contour de l'ouverture 38 par des premiers moyens de fixation classiques comprenant notamment des moyens d'encliquetage 40.

Un joint d'étanchéité 42 est interposé entre les contours complémentaires de la glace 30 et de l'ouverture 38 du pare-chocs.

Le réflecteur 26 est relié à la surface interne de la peau 24 par des seconds moyens de fixation 44, distincts des premiers moyens de fixation 40, formant des moyens de réglage de la position de ce réflecteur.

Un joint d'étanchéité 46, en forme générale de ruban annulaire, est interposé entre des contours complémentaires d'un rebord interne 48 de l'ouverture 38 et du réflecteur 26.

Les seconds moyens de fixation 44 comprennent trois tiges T1 à T3 de positionnement du réflecteur 26 sensiblement parallèles à un axe optique du bloc optique 12.

Chaque tige T1 à T3 est munie d'une extrémité rotulante E1 à E3 de liaison avec la peau 24 du pare-chocs. Ces extrémités E1 à E3 sont emboîtées dans des logements sphériques complémentaires L1 à L3 ménagés dans la peau 24.

Les trois tiges T1 à T3 sont assujetties au réflecteur 26. Les axes des tiges T1 à T3 passent par les sommets d'un triangle approximativement rectangle, la tige T1 passant par le sommet d'angle droit étant fixe et les deux autres tiges T2, T3 étant déplaçables sensiblement parallèlement à l'axe optique par rotation autour de leur axe.

Le réflecteur 26 est muni d'une portion 50 de liaison avec les tiges T1 à T3 dans laquelle sont ménagés des orifices O2, O3 de passage de ces tiges.

La portion de liaison 50 est délimitée par exemple par une collerette plane périphérique du réflecteur 26, venue de matière avec le réflecteur ou rapportée sur ce dernier, sensiblement parallèle à un plan perpendiculaire à l'axe optique du bloc optique 12. On notera que seuls deux orifices O2, O3 sont représentés sur la figure 2.

Les tiges T1, T3, dont les axes s'étendent sensiblement dans un même plan horizontal, sont assujetties aux contours des orifices correspondants ménagés dans la collerette 50 par des filetages complémentaires.

La tige T1 fixe n'est pas destinée à être manoeuvrée après montage du réflecteur 26 sur la peau 24 du pare-chocs.

L'extrémité de la tige T3 opposée à son extrémité rotulante E3 est munie d'une tête de manoeuvre M3 afin de pouvoir être entraînée en rotation autour de son axe pour régler les feux du réflecteur 26 en azimut.

La tige T2 est disposée au-dessus de la tige T1 de manière que les axes de ces tiges s'étendent sensiblement dans un plan vertical.

La tige T2 est reliée à des moyens motorisés classiques rapportés sur le réflecteur 26, destinés à entraîner cette tige en rotation autour de son axe et en translation le long de son axe.

Le déplacement de la tige T2 permet de régler les feux du réflecteur 26 en site.

Bien entendu, les moyens de réglage en azimut et en site du bloc optique peuvent être d'un autre type que ceux décrits et illustrés précédemment.

L'invention ne se limite pas au mode de réalisation illustré sur les figures.

En particulier, le réflecteur 26 et la glace 30 peuvent être fixés sur un élément de carrosserie autre qu'un pare-chocs, notamment sur une calandre ou tout autre élément qui participe à l'esthétique extérieure du véhicule.

Une glace auxiliaire peut être fixée sur le réflecteur 26 de manière à optimiser la protection de ce dernier. Dans ce cas, la glace auxiliaire peut comporter les reliefs habituels de conformation des faisceaux lumineux et la glace portée par l'élément de carrosserie peut être lisse de manière à améliorer le style du bloc avant.

Le réflecteur auxiliaire 28 de clignotant peut être venu de matière avec le réflecteur 26 ou bien séparé de ce dernier, la glace 30 étant associée, dans ce dernier cas, uniquement au réflecteur 26.

Des feux très divers peuvent être intégrés dans le réflecteur 26, notamment un feu anti-brouillard ou un feu de longue portée.

Le bloc optique agencé selon l'invention peut être équipé uniquement de feux auxiliaires tels qu'un feu anti-brouillard ou un feu longue portée. Bien entendu, dans ces cas là, les moyens de réglage en azimut du bloc optique peuvent être supprimés.

Le joint d'étanchéité interposé entre l'élément de carrosserie et le réflecteur peut être de types variés, notamment du type ruban souple, à soufflet, métallique élastique, etc ... .

L'invention comporte de nombreux avantages.

Le bloc optique agencé selon l'invention est simple et économique à réaliser. Il comporte un nombre réduit de pièces. On notera en particulier l'absence de cuvelage classique dans le bloc optique selon l'invention.

L'agencement selon l'invention permet de s'affranchir de tolérances de fabrication sévères, l'assemblage des différents éléments du bloc optique étant très simple.

L'agencement du bloc optique selon l'invention est esthétique. Il permet d'obtenir un affleurement très précis de la glace à la surface externe de l'élément de carrosserie, les écarts d'alignement entre ces deux organes étant très réduits, voire inexistants dans le cas où la glace est fixée sur une peau de pare-chocs.

L'invention permet d'utiliser des réflecteurs de types très variés.

Dans le cas où la glace et le réflecteur sont fixés sur un pare-chocs, le montage du bloc optique se fait de façon très simple et pratique. En effet, on dispose de deux sous-ensembles, à savoir un premier sous-ensemble comprenant le réflecteur du bloc optique et ses équipements habituels, et un second sous-ensemble comprenant le pare-chocs et la glace du bloc optique. Le montage du bloc optique se fait très simplement par fixation du premier sous-ensemble sur le second sous-ensemble.

La peau en matière plastique du pare-chocs peut être facilement fabriquée par des procédés classiques de moulage permettant de former directement l'ouverture d'agencement de la glace du bloc optique.

## Revendications

1. Agencement d'un bloc optique (12) sur un bloc avant (10) de véhicule automobile, le bloc optique (12) comprenant un réflecteur (26) et une glace (30) séparant ce réflecteur de l'extérieur du véhicule, le bloc avant (10) étant délimité par un élément de carrosserie participant à l'esthétique extérieure du véhicule (16), la glace (30) étant agencée dans une ouverture (38) de l'élément de carrosserie (16) en étant fixée à cet élément de carrosserie par des premiers moyens de fixation (40), caractérisé en ce que le réflecteur (26) est relié directement à l'élément de carrosserie (16) par des seconds moyens de fixation (44) distincts des premiers moyens de fixation (40) et formant des moyens de réglage de la position de ce réflecteur (26).

2. Agencement selon la revendication 1, caractérisé en ce que les premiers moyens de fixation comprennent des moyens d'encliquetage (40).

3. Agencement selon la revendication 1 ou 2, caractérisé en ce qu'un joint d'étanchéité (42) est interposé entre des contours complémentaires de l'ouverture (38) de l'élément de carrosserie et de la glace (30).

4. Agencement selon l'une quelconque des revendications précédentes, caractérisé en ce qu'un joint d'étanchéité (46) est interposé entre des contours complémentaires d'un rebord interne (48) de l'élément de carrosserie (16) et du réflecteur (26).

5. Agencement selon l'une quelconque des revendications précédentes, caractérisé en ce que les seconds moyens de fixation (44) comprennent trois tiges (T1 à T3) de positionnement du réflecteur (26) sensiblement parallèles à un axe optique du bloc optique, assujetties au réflecteur (26), les axes de ces tiges (T1 à T3) passant par les sommets d'un triangle approximativement rectangle, la tige (T1) passant par le sommet d'angle droit étant fixe et les deux autres tiges (T2, T3) étant déplaçables sensiblement parallèlement à l'axe optique par rotation autour de leur axe, chaque tige (T1 à T3) comportant une extrémité rotulante de liaison avec l'élément de carrosserie (16).

6. Agencement selon la revendication 5, caractérisé en ce qu'au moins une des tiges de positionnement (T2) est déplaçable à l'aide de moyens motorisés (52).

7. Agencement selon la revendication 5 ou 6, caractérisé en ce que le réflecteur (26) est muni d'une portion (50) de liaison avec les tiges (T1 à T3) dans laquelle sont ménagés des orifices (02, 03) de passage de ces tiges, ces tiges étant notamment assujetties aux contours des orifices (02, 03) par des filetages complémentaires.

8. Agencement selon la revendication 7, caractérisé en ce que la portion de liaison est délimitée par une collerette plane périphérique (50) du réflecteur (26), sensiblement parallèle à un plan perpendiculaire à l'axe optique du bloc optique.

9. Agencement selon l'une quelconque des revendications précédentes, caractérisé en ce que le réflecteur (26) est destiné à être équipé notamment de feux de route et de croisement, et en ce que le bloc optique comporte de plus un réflecteur auxiliaire (28) destiné à être équipé d'un clignotant, rapporté, notamment par encliquetage, sur une extrémité latérale du réflecteur (26), la glace (30) étant commune aux deux réflecteurs (26, 28).

10. Agencement selon l'une quelconque des revendications précédentes, caractérisé en ce que l'élément de carrosserie comprend un pare-chocs (16), l'ouverture (38) d'agencement de la glace étant ménagée dans une peau (24) en matière plastique délimitant le pare-chocs.

## Patentansprüche

1. Anordnung einer optischen Einheit (12) an einem Frontbauteil (10) eines Kraftfahrzeugs, wobei die optische Einheit (12) einen Reflektor (26) und eine Scheibe (30) aufweist, die diesen Reflektor vom Fahrzeugäußeren trennt, das Frontbauteil (10) durch ein Karosserieelement (16) begrenzt ist, das zum ästhetischen Erscheinungsbild des Fahrzeugs beiträgt, und die Scheibe (30) dadurch in einer Öffnung (38) des Karosserieelements (16) gehalten ist, daß sie an diesem Karosserieelement durch erste Befestigungsmittel (40) befestigt ist, dadurch gekennzeichnet, daß der Reflektor (26) durch zweite Befestigungsmittel (44), die von den ersten Befestigungsmitteln (40) verschieden sind und Mittel zur Einstellung der Position des Reflektors (26) bilden, direkt mit dem Karosserieelement (16) verbunden ist.

2. Anordnung nach Anspruch 1, dadurch gekennzeichnet, daß die ersten Befestigungsmittel Rastmittel (40) aufweisen.

3. Anordnung nach Anspruch 1 oder 2, dadurch gekennzeichnet, daß eine Dichtung (42) zwischen den komplementären Konturen der Öffnung (38) des Karosserieelements und der Scheibe (30) eingefügt ist.

4. Anordnung nach einem der vorstehenden Ansprüche, dadurch gekennzeichnet, daß eine Dichtung (46) zwischen den komplementären Konturen einer inneren Randleiste (48) des Karosserieelements (16) und des Reflektors (26) eingefügt ist.

5. Anordnung nach einem der vorstehenden Ansprüche, dadurch gekennzeichnet, daß die zweiten Befestigungsmittel (44) drei Bolzen (T1 bis T3) zur Positionierung des Reflektors (68) im wesentlichen parallel zu einer optischen Achse der optischen Einheit aufweisen, die am Reflektor (26) befestigt sind und deren Achsen durch die Ecken eines annähernd rechtwinkligen Dreiecks verlaufen, wobei der Bolzen (T1), der durch den Scheitel des rechten Winkels geht, fest ist, während die beiden anderen Bolzen (T2, T3) durch Drehung um ihre Achse im wesentlichen parallel zur optischen Achse verstellbar sind, wobei jeder Bolzen (T1 bis T3) ein Gelenk-Ende zur Verbindung mit dem Karosserieelement (16) aufweist.

6. Anordnung nach Anspruch 5, dadurch gekennzeichnet, daß wenigstens einer der Positionierbolzen (T2) mit Hilfe eines Motorantriebs (52) verstellbar ist.

7. Anordnung nach Anspruch 5 oder 6, dadurch gekennzeichnet, daß Reflektor (26) zur Verbindung mit den Bolzen (T1 bis T3) einen Verbindungsabschnitt (50) aufweist, in dem Öffnungen (O2, O3) für den Durchtritt dieser Bolzen ausgebildet sind, wobei diese Bolzen insbesondere durch komplementäre Gewinde an den Konturen der Öffnungen (O2, O3) befestigt sind.

8. Anordnung nach Anspruch 7, dadurch gekennzeichnet, daß der Verbindungsabschnitt durch einen flachen Randflansch (50) des Reflektors (26) begrenzt ist, der im wesentlichen parallel zu einer zur optischen Achse der optischen Einheit rechtwinkligen Ebene liegt.

9. Anordnung nach einem der vorstehenden Ansprüche, dadurch gekennzeichnet, daß der Reflektor (26) dazu bestimmt ist, insbesondere mit Fernlicht- und Abblendlampen bestückt zu werden, und daß die optische Einheit weiterhin einen Hilfsreflektor (28) aufweist, der dazu bestimmt ist, mit einer Blinkleuchte bestückt zu werden, und der insbesondere durch Verrastung an ein seitliches Ende des Reflektors (26) angesetzt ist, wobei die Scheibe (30) den beiden Reflektoren (26, 28) gemeinsam ist.

10. Anordnung nach einem der vorstehenden Ansprüche, dadurch gekennzeichnet, daß das Karosserieelement einen Stoßdämpfer (16) aufweist, wobei die Öffnung (38) für die Scheibe in einer den Stoßdämpfer begrenzenden Haut (24) aus Kunststoff ausgebildet ist.

## Claims

1. Mounting for an optical block (12) on a front part (10) of a motor vehicle, the optical block (12) comprising a reflector (26) and a lens (30) separating this reflector from the outside of the vehicle, the front part (10) being defined by an element of the bodywork which takes part in the formation of the external appearance of the vehicle (16), the lens (30) being mounted in an opening (38) in the bodywork element (16) and being secured to this bodywork element by first securing means (40), characterised in that the reflector (26) is attached directly to the bodywork element (16) by second securing means (44) distinct from the first securing means (40) and forming means for adjusting the position of this reflector (26).

2. Mounting according to claim 1, characterised in that the first securing means comprise snap-engagement means (40).

3. Mounting according to claim 1 or 2, characterised in that a sealing gasket (42) in interposed between complementary outlines of the opening (38) in the bodywork element and the lens (30).

4. Mounting according to any one of the foregoing claims, characterised in that a sealing gasket (46) in interposed between complementary outlines of an internal rim or flange (48) of the bodywork element (16) and of the reflector (26).

5. Mounting according to any one of the foregoing claims, characterised in that the second securing means (44) comprise three lugs (T1 to T3) for locating the reflector (26) substantially parallel to an optical axis of the optical block, connected to the reflector (26), the axes of these lugs (T1 to T3) lying on the corners of a substantially right-angled triangle, the lug (Tl) which lies on the right-angled comer of the triangle being fixed and the other two lugs (T2, T3) being displaceable substantially parallel to the optical axis by rotation about their axes, each lug (T1 to T3) having a universally jointed end connecting it to the bodywork element (16).

6. Mounting according to claim 5, characterised in that at least one of the locating lugs (T2) is displaceable with the aid of power-operated means (52).

7. Mounting according to claim 5 or 6, characterised in that the reflector (26) is provided with a portion (50) for connection to the lugs (T2 to T3) in which are provided openings (02, 03), for passage of these lugs, these lugs being in particular connected to the rims of these openings, (02, 03) by complementary screw threads.

8. Mounting according to claim 7, characterised in that the connecting portion is bounded by a peripheral flat flange or rim (50) of the reflector (26), substantially parallel to a plane perpendicular to the optical axis of the optical block.

9. Mounting according to any one of the foregoing claims, characterised in that the reflector (26) is designed to be equipped in particular with headlamps and passing lamps and in that the optical block has in addition an auxiliary reflector (28) designed to be fitted with a flasher, connected, in particular by snap-engagement, to a side edge of the reflector (26), the lens (30) being common to the two reflectors (26, 28).

10. Mounting according to any one of the foregoing claims, characterised in that the bodywork element comprises a bumper (16), the opening (38) for receiving the lens being provided in a skin (24) of plastics material forming part of the bumper.
